Europäisches Patentamt

European Patent Office

Office européen des brevets

(19)

(11) Veröffentlichungsnummer : **0 022 471
B1**

(12) **EUROPÄISCHE PATENTSCHRIFT**

(45) Veröffentlichungstag der Patentschrift :
26.01.83

(21) Anmeldenummer : 80103145.1

(22) Anmeldetag : 06.06.80

(51) Int. Cl.³ : **G 01 D 5/20**

(54) **Weggeber zur Erfassung der Stellung eines Organs, insbesondere eines Fahrpedals.**

(30) Priorität : **14.07.79 DE 2928581**

(43) Veröffentlichungstag der Anmeldung :
**21.01.81 Patentblatt 81/03**

(45) Bekanntmachung des Hinweises auf die Patenterteilung : **26.01.83 Patentblatt 83/04**

(84) Benannte Vertragsstaaten :
**FR GB IT SE**

(56) Entgegenhaltungen :
**DE A 2 832 255
DE B 1 162 601
US A 2 749 746
US A 3 774 134
US A 3 803 549
US A 4 088 013**

(73) Patentinhaber : **VDO Adolf Schindling AG
Gräfstrasse 103
D-6000 Frankfurt/Main (DE)**

(72) Erfinder : **Hauschild, Wolfgang
Kastanienhain 29
D-6232 Bad Soden 3 (DE)**

(74) Vertreter : **Könekamp, Herbert, Dipl.-Ing.
Sodener Strasse 9
D-6231 Schwalbach (DE)**

Jouve, 18, rue St-Denis, 75001 Paris, France

## Weggeber zur Erfassung der Stellung eines Organs, insbesondere eines Fahrpedals

Die Erfindung betrifft einen Weggeber zur Erfassung der Stellung eines Organs, insbesondere eines Fahrpedals eines Kraftfahrzeugs, die in eine elektrische Größe umgesetzt wird.

Als derartige Weggeber sind Potentiometer bekannt, deren Schleifer mit dem Organ, dessen Stellung gemessen werden soll, gekuppelt ist. Derartige Potentiometer sind insbesondere bei den rauhen Betriebsbedingungen eines Kraftfahrzeugs störanfällig, was vor allem durch den mechanischen Abgriff bedingt ist. Zur Vermeidung dieses Nachteils kann daran gedacht werden, das Potentiometer sorgfältig gegen die Umgebungseinflüsse abzuschirmen und dazu mit dem Fahrpedal über Übertragungsorgane zu verbinden. Diese Lösung ist aber aufwendig.

Der vorliegenden Erfindung liegt daher die Aufgabe zugrunde, einen Weggeber der eingangs genannten Gattung zu schaffen, der unter Vermeidung der vorstehend genannten Nachteile besonders zuverlässig ist und trotzdem keinen hohen Herstellaufwand erfordert.

Diese Aufgabe wird erfindungsgemäß dadurch gelöst, daß mit dem Organ ein Kern aus weichmagnetischem, amorphen Material dergestalt in Verbindung steht, daß eine Wegverstellung des Organs eine elastische Verformung des Kerns hervorruft, und daß auf dem Kern wenigstens eine Wicklung aufgebracht ist, die an eine Erreger- und Meßschaltungsanordnung der magnetischen Eigenschaften des Kerns angeschlossen ist.

Durch die erfindungsgemäß vorgesehene Verwendung weichmagnetischer, amorpher Materialien für den Kern des Weggebers werden die Nachteile vermieden, die der Anwendung einer Meßmethode zur Wegverstellung, die auf Veränderung magnetischer Eigenschaften ferromagnetischer Materialien beruht, bisher entgegenstanden. Es war nämlich seit langer Zeit bekannt, daß Zug-, Druck- und/oder Biegebeanspruchungen die magnetischen Eigenschaften ferromagnetischer Stoffe beeinflussen, so die Permeabilität, die Remanenzinduktion, die Koerzitivfeldstärke und die Hystereseverluste (Reinboth, Technologie und Anwendung magnetischer Werkstoffe, Berlin 1970 Seiten 47 ff). Auf diese seit langem bekannten weichmagnetischen Werkstoffe konnten jedoch keine größeren mechanischen Spannungen zur Messung aufgebracht werden, da diese Werkstoffe schon bei verhältnismäßig geringen Spannungen aus dem Bereich der elastischen Verformung in den Bereich der plastischen Verformung übergehen. Diese weichmagnetischen Stoffe haben nach DIN 1710 typische Härtewerte zwischen 50-200 HV (Vickershärte). Solange die angelegten mechanischen Spannungen im elastischen Bereich dieser Werkstoffe bleiben, erreichen die magnetischen Eigenschaften nach Wegfall der mechanischen Spannung wieder ihre Ausgangswerte. Tritt jedoch unter Belastung eine plastische Verformung ein, so werden die magnetischen Eigenschaften bleibend verändert, was einer genauen Messung entgegensteht.

Ein wichtiges Merkmal der vorliegenden Erfindung besteht daher darin, daß der Kern mit dem das verstellbare Organ in Verbindung steht, aus weichmagnetischem amorphem Material hergestellt ist. Diese amorphen weichmagnetischen Materialien, die auf der Basis von Eisen und Nickel oder auf der Basis von Kobalt, Eisen und Nickel erzeugt sind, weisen mechanische Eigenschaften auf, die mit denen sehr guter Stahlsorten vergleichbar sind und eine hohe Streckgrenze, große Zugfestigkeit und hohe Biegewechselfestigkeit bei einer Vickershärte von ca. 1 000 bieten. Auf der anderen Seite haben diese Werkstoffe auch eine sehr große, zur Messung nutzbare Permeabilität, die größer als 500 000 sein kann.

Ein aus einem solchen Material hergestellter Kern ist erfindungsgemäß mit dem Organ so verbunden, daß der Kern bei Wegverstellung des Organs elastisch verformt wird. Vorzugsweise kann dabei der Kern so ausgebildet sein — insbesondere als Ringkern — und so angeordnet sein, daß er zugleich die Rückstellkraft des Organs hervorruft. Der Kern wirkt also als Wegkraftumformer, um letztendlich mit einer Erreger- und Meßschaltungsanordnung eine der Wegverstellung oder Winkelverstellung entsprechende, vorzugsweise proportionale, elektrische Größe abzugeben. Hierzu ist auf dem Kern mindestens eine Wicklung aufgebracht, die mit der Erreger- und Meßschaltungsanordnung in Verbindung steht um die Veränderung der magnetischen Eigenschaften des Kerns vorzugsweise der Hystereseschleife unter der Einwirkung der mechanischen Spannung zu messen. In einfacher Weise kann auf dem Kern je eine Erregerspule und eine Meßspule angeordnet sein, es ist jedoch im getakteten Betrieb auch möglich, eine einzige Spule abwechselnd zur Erregung des Kerns und zur Messung dessen magnetischer Eigenschaften durch Induktion auszunutzen.

In einer bevorzugten Ausführungsform des Weggebers ist die Erreger- und Meßschaltungsanordnung zur Messung der Permeabilitätsänderung des Kerns eingerichtet. Die Permeabilitätsänderung gibt in besonders guter Weise die Änderung der magnetischen Eigenschaften des Kerns unter mechanischer Spannung wieder.

Weiterhin ist es vorteilhaft, daß die Erreger- und Meßschaltungsanordnung und die Spule (Spulen) auf dem Kern zur Messung der Permeabilität nach dem Prinzip der Förster-Sonde angeordnet sind.

Die Förster-Sonde läßt bereits die Messung verhältnismäßig geringer Permeabilitätsänderungen zu.

Vorteilhafte amorphe weichmagnetische Legierungen, aus denen der Kern besteht, sind in den Ansprüchen 4 und 5 angegeben. Solche Legierungen sind unter dem Warenzeichen « VITROVAC » 4 040 und 6 010 bekannt.

Im allgemeinen ist « VITROVAC » die Bezeichnung für eine große Gruppe von Legierungen, die metallische Eigenschaften, aber kein Kristallgitter wie die herkömmlichen metallischen Werkstoffe haben. Ihre Atomanordnung ist vielmehr die einer eingefrorenen Schmelze, also ungeordnet, amorph.

Besonders vorteilhaft ist der Weggeber mit den Merkmalen aufgebaut, daß der Kern als federnder Ringkern ausgebildet ist und daß der Ringkern an einer ersten Stelle, an einem gegenüber dem verstellbaren ersten Organ, ortsfesten Körper anliegt und an einer dieser ersten Stelle annähernd gegenüberliegenden zweiten Stelle an dem Organ dergestalt anliegt, daß die Ringform bei einer Verstellung des Organs deformiert wird.

Dieser Ringkern hat den Vorteil, daß die Änderungen der magnetischen Eigenschaften insbesonder der Hystereseschleife besonders zuverlässig festgestellt werden können, da die Kraftlinien annähernd vollständig innerhalb des relativ kurzen Weges, der durch den Ringkern gebildet wird, verlaufen. Darüber hinaus bildet der federnde Ringkern zugleich die Rückstellkraft für das Organ, so daß getrennte Elemente zur Rückstellung wie Federn entfallen. Vor allem gibt der Ringkern aber eine große Änderung der Meßgröße, da dieser Ringkern nicht nur in einem begrenzten Bereich an einer Stelle, sondern praktisch vollständig in seiner ganzen Form verändert wird.

In einer anderen Ausführungsform, die sich durch einen verhältnismäßig geringen Herstellaufwand auszeichnet, weist der Weggeber die Merkmale auf, daß der Kern stabförmig ausgebildet ist, daß der stabförmige Kern an einem Ende mit einem ortsfesten Körper verbunden ist und im Abstand zu dieser Verbindungsstelle mit dem verstellbaren Organ dergestalt in Verbindung steht, daß der stabförmige Kern auf Biegung beansprucht wird.

Eine Weiterbildung der voranstehenden Ausführungsform des Weggebers besteht darin, daß ein Abschnitt des stabförmigen Kerns im Abstand zu der Verbindungsstelle parallel zu der Längsausdehnung des Fahrpedals an diesem anliegt.

Dadurch kann die Verformung des Kerns besonders zuverlässig der Fahrpedalverstellung folgen.

In einer ersten Variante der voranstehenden Ausführungsform ist der stabförmige Kern so gekrümmt, daß er einen Winkel kleiner 90° einschließt, der bei einer Betätigung des Fahrpedals weiter verkleinert wird.

Bei dieser Variante unterliegt der stabförmige Kern verhältnismäßig großen Biegebeanspruchungen bei einer Betätigung des Fahrpedals, was eine entsprechend große Meßgröße hervorruft.

In einer zweiten Variante ist der stabförmige Kern so gebogen, daß er einen Winkel größer als 90° einschließt, der bei einer Betätigung weiter vergrößert wird.

In diesem Fall ist die Biegebeanspruchung verhältnismäßig gering, so daß das Material des Kerns mit Sicherheit im elastischen Bereich beansprucht wird.

Eine andere Weiterbildung des Weggebers, die den Aufwand für diesen Weggeber weiter herabsetzt, besteht darin, daß der Kern mit nur einer einzigen Wicklung versehen ist, die mit einer Erregerschaltungsanordnung und einer Meßschaltungsanordnung verbunden ist, und daß an die Erregerschaltungsanordnung und die Meßschaltungsanordnung ein getakteter Zeitgeber zum abwechselnd getakteten Betrieb dieser beiden Schaltungsanordnungen in Verbindung mit der Spule angeschlossen ist.

In diesem Fall erfolgt also in einer einzigen Spule zunächst die Erregung des Kerns und anschließend die Abfrage seiner magnetischen Eigenschaften, während die Erregung ausgeschaltet ist.

Die Erfindung wird im folgenden anhand einer Zeichnung mit 7 Figuren erläutert. Es zeigt:

Figur 1 einen Stellungsgeber eines Fahrpedals mit einem Ringkern,

Figur 2 einen Stellungsgeber eines Fahrpedals mit einem stabförmigen Kern in einer ersten Ausführungsform,

Figur 3 einen Stellungsgeber eines Fahrpedals mit einem stabförmigen Kern in einer zweiten Ausführungsform,

Figur 4 einen Stellungsgeber eines Fahrpedals in einer dritten Ausführungsform, in der der stabförmige Kern innerhalb des Fahrpedals angeordnet ist,

Figur 5 Hystereseschleifen im belasteten und unbelasteten Zustand des Fahrpedals bzw. bei verschiedenen Winkelstellungen des Fahrpedals,

Figur 6 eine Schaltungsanordnung zur Messung der Permeabilitätsänderung nach dem Prinzip der Förster-Sonde und

Figur 7 eine Schaltungsanordnung zum getakteten Betrieb einer einzigen Spule auf einem Kern.

Gleiche Teile sind in allen Figuren mit übereinstimmenden Bezugszeichen bezeichnet.

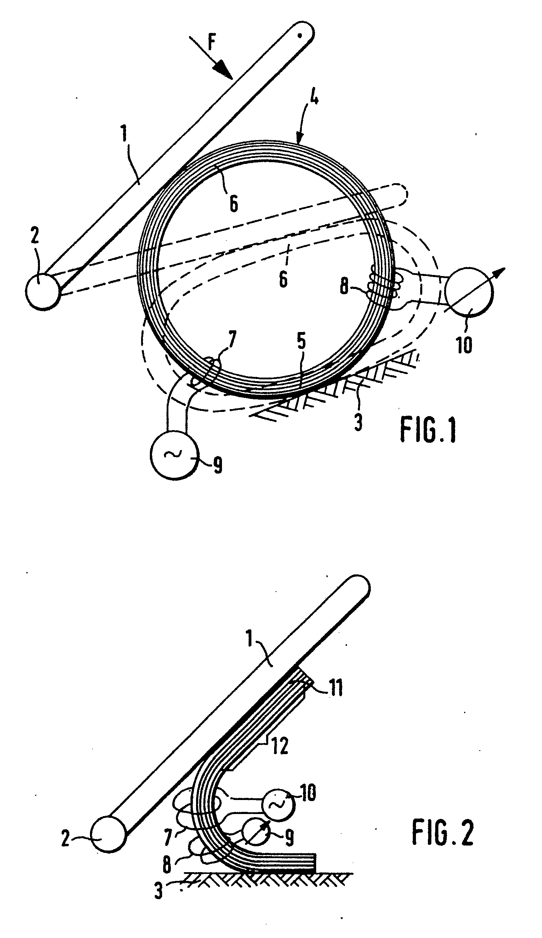

In Figur 1 ist mit 1 ein Fahrpedal 1 bezeichnet, welches um ein Lager 2 unter der Kraft F schwenkbar ist. Zwischen dem Fahrpedal und einem ihm gegenüber ortsfestem Boden 3 ist ein Ringkern 4 angeordnet. Dieser liegt an einer ersten Stelle 5 an dem Boden an und an einer zweiten annähernd gegenüberliegenden Stelle 6 unter dem Fahrpedal an diesem an. Um den Kern sind zwei Spulen 7 und 8 gewickelt, und zwar ist 7 eine mit einer Stromquelle 9 verbundene Primärspule und 8 eine mit einer Meßeinrichtung 10 verbundene Sekundärspule.

In Figur 1 ist der annähernd kreisringsförmige Ringkern in der Ruhestellung des Fahrpedals 1 mit durchgezogenen Linien dargestellt, während der Ringkern bei einem Niedertreten des Fahrpedals die mit unterbrochenen Linien dargestellte Form annimmt. Bei dieser Verformung treten insbesondere Biegebeanspruchungen auf, welche eine Veränderung der Hystereseschleife des Kernmaterials aus einer weichmagnetischen amorphen Legierung hervorrufen.

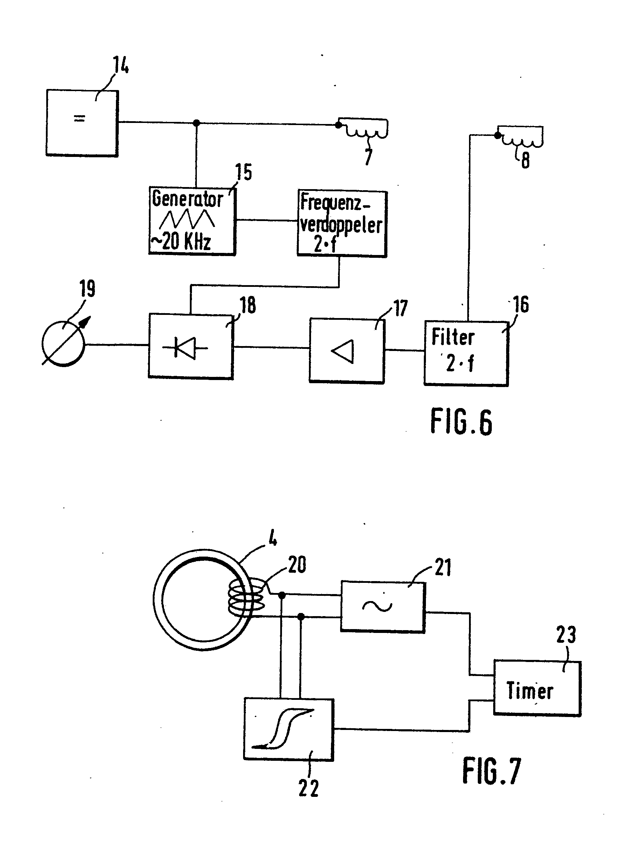

Aus Figur 5 sind zwei typische Verläufe der Hystereseschleifen erkennbar. Die mit einer durchgezogenen Linie gezeichnete Hystereseschleife hat das Kernmaterial im unbelasteten Zustand des Kerns, während die mit einer durchbrochenen Linie gezeichnete Hystereseschleife diejenige des deformierten Kerns darstellt. Auf die Messung dieser Hystereseschleifen wird weiter unten eingegangen.

In den Figuren 2, 3 und 4 sind stabförmige Kerne 11 vorgesehen, welche die Primärspule und die Sekundärspule 7 bzw. 8 tragen.

Im einzelnen ist in Figur 2 ein Ende des stabförmigen Kerns an dem Boden 3 angebracht, während der Kern in einem darüber liegenden Abschnitt 12 an dem Fahrpedal anliegt. Dabei schließt der Abschnitt 12 und das an dem Boden anliegende Ende einen Winkel kleiner 90° ein.

Aus Figur 2 ist ersichtlich, daß bei Niedertreten des Fahrpedals dieser Winkel weiter verkleinert wird. Bei dieser Deformation des Kerns gegenüber dem Ruhezustand ergibt sich wiederum eine Änderung der Hystereseschleife entsprechend Figur 5.

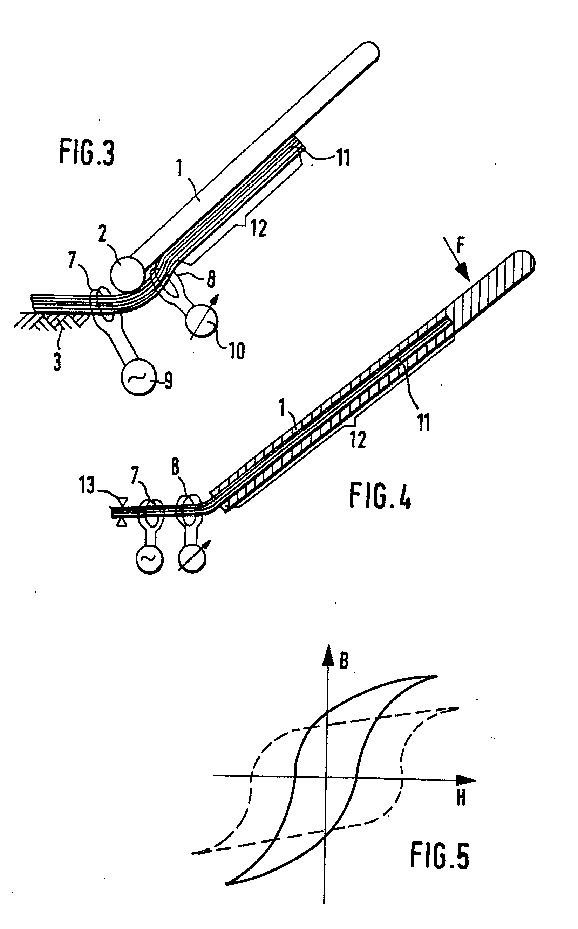

Die Anordnung des stabförmigen Kerns 11 in Figur 3 unterscheidet sich von derjenigen in Figur 2 dadurch, daß gemäß Figur 3 das dem Abschnitt 12 abgewandte Ende des stabförmigen Kerns annähernd in Verlängerung dieses Abschnitts in dem Bereich vor dem Fahrpedal an dem Boden 3 befestigt ist. Dadurch stellt sich zwischen diesem befestigten Ende und dem Abschnitt 12 ein Winkel größer als 90° ein, der sich bei Niederdrücken des Fahrpedals weiter vergrößert. Auch hierdurch ergibt sich eine signifikante Veränderung der Hystereseschleife analog zu Figur 5.

In der Ausführungsform nach Figur 4 ist der stabförmige Kern im Bereich seines Abschnitts 12 innerhalb des Fahrpedals untergebracht und an seinem entgegengesetzten Ende an der Stelle 13 eingespannt. Hierbei übernimmt der stabförmige Kern zugleich die Funktion des Lagers 2 in den Figuren 2 und 3. Die Veränderung der Hystereseschleife erfolgt hier ähnlich wie in Figur 3 unter Einfluß der Winkelverstellung des Fahrpedals.

Anstelle der in den Figuren 1-4 dargestellten einfachen Wechselstromquelle zur Erregung des Kerns und der Meßeinrichtung 10 wird bevorzugt eine Erreger- und Meßschaltungsanordnung zur Messung der Permeabilität des Kerns nach dem Prinzip der Förster-Sonde gemäß Figur 6 vorgesehen : Dieses Meßprinzip der Förster-Sonde besteht darin, daß bei größeren Wechselfeldaussteuerungen die durch ein überlagertes Gleichfeld bedingte Kurvenverzerrung mit Hilfe eines selektiven Verstärkers als Intensitätsänderung einer der geradzahligen Oberwellen gemessen wird. Hierzu ist die Erregerspule 7 in Figur 6 mit einer Gleichstromquelle 14 und einem Generator 15 verbunden, der einen dreieckförmigen Strom einer Frequenz von ungefähr 20 kHz erzeugt. Dieser dreieckförmige Strom durch die Primärwicklung muß ausreichen, um die Kerne in das Gebiet der magnetischen Sättigung zu treiben. Das durch die Gleichstromquelle 14 hervorgerufene Gleichfeld dient dazu, durch die durch es bedingte Asymmetric zur Nullinie in den Sekundärwicklungen Spannungsimpulse zu erzeugen, die sich nicht mehr zu jedem Zeitpunkt vollständig kompensieren und eine Ausgangsspannung erzeugen können. Hierzu wird die Ausgangsspannung der Sekundärwicklungen 8 über ein Filter 16, welches nur die zweite Harmonische durchläßt, einem Verstärker 17 zugeführt. Der Ausgang des Verstärkers ist über einen gesteuerten Gleichrichter — zur Anzeige der Feldrichtung — 18 mit einem Drehspulinstrument 19 verbunden.

In Figur 7 ist schematisch dargestellt, wie eine einzige Spule 20, die auf den Ringkern 4 aufgebracht ist, sowohl mit einer Erregerschaltungsanordnung 21 als auch mit einer Meßschaltungsanordnung 22 zur Messung der Hystereseschleife ständig in Verbindung steht. Beide Schaltungsanordnungen werden aber durch einen Taktgeber 23 so gesteuert, daß die Spule 20 jeweils zunächst einen Erregerstromimpuls erhält und sodann zu der Meßschaltungsanordnung durchgeschaltet ist, um den durch diese Erregung erzeugten Impuls zu messen. Dadurch ist der Schaltungsaufbau weiter verbessert und die Wirtschaftlichkeit der Schaltungsanordnung erhöht.

## Ansprüche

1. Weggeber zur Erfassung der Stellung eines Organs, insbesondere eines Fahrpedals eines Kraftfahrzeugs, die in eine elektrische Größe umgesetzt wird, dadurch gekennzeichnet, daß mit dem Organ (Fahrpedal 1) ein Kern (4 ; 11) aus weichmagnetischem, amorphen Material dergestalt in Verbindung steht, daß eine Wegverstellung des Organs eine elastische Verformung des Kerns hervorruft, und daß auf den Kern (4 ; 11) wenigstens eine Wicklung (20 ; 7, 8) aufgebracht ist, die an eine Erreger- und Meßschaltungsanordnung (21, 22 ; 14-19) der magnetischen Eigenschaften des Kerns angeschlossen ist.

2. Weggeber nach Anspruch 1, dadurch gekennzeichnet, daß die Erreger- und Meßschaltungsanordnung zur Messung der Permeabilitätsänderung des Kerns (4 ; 11) eingerichtet ist.

3. Weggeber nach Anspruch 2, dadurch gekennzeichnet, daß die Erreger- und Meßschaltungsanordnung und die Spule(n) auf den Kern (4 ; 11) zur Messung der Permeabilität nach dem Prinzip der Förster-Sonde angeordnet sind (Figur 6).

4. Weggeber nach einem der Ansprüche 1-3, gekennzeichnet durch die Verwendung einer amorphen, weichmagnetischen Legierung auf der Basis von Eisen und Nickel hoher Permeabilität (größer als 60.000), einer Vickershärte ($HV_{02}$)

von 1.000 und einer Biegewechselfestigkeit ($10^7$ Lastwechselspiele ) von ca. $\pm 600$ N/mm$^2$.

5. Weggeber nach einem der Ansprüche 1-3, gekennzeichnet durch die Verwendung einer amorphen, weichmagnetischen Legierung auf der Basis von Kobalt, Eisen und Nickel hoher Pemeabilität (größer als 500.000), einer Vickershärte ($HV_{02}$) von 1.015 und einer Biegewechselfestigkeit ($10^7$ Lastwechselspiele) von $\pm 700$ N/mm$^2$.

6. Weggeber nach einem der Ansprüche 1-5, dadurch gekennzeichnet, daß der Kern als federnder Ringkern (4) ausgebildet ist, daß der Ringkern an einer ersten Stelle (5) an einem gegenüber dem verstellbaren Organ (1) ortsfesten Körper (Boden 3) anliegt und an einer dieser ersten Stelle annähernd gegenüberliegenden zweiten Stelle (6) an dem Organ dergestalt anliegt, daß die Ringform bei einer Verstellung des Organs deformiert wird (Figur 1).

7. Weggeber nach einem der Ansprüche 1-5, dadurch gekennzeichnet, daß der Kern (11) stabförmig ausgebildet ist, daß der stabförmige Kern an einem Ende mit einem ortsfesten Körper (Boden 3) verbunden ist und im Abstand zu dieser Verbindungsstelle mit dem verstellbaren Organ dergestalt in Verbindung steht, daß der stabförmige Kern auf Biegung beansprucht wird (Figuren 2-4).

8. Weggeber nach Anspruch 7, dadurch gekennzeichnet, daß ein Abschnitt (12) des stabförmigen Kerns (11) im Abstand zu der Verbindungsstelle parallel zu der Längsausdehnung des Fahrpedals an diesem anliegt.

9. Weggeber nach Anspruch 8, dadurch gekennzeichnet, daß der stabförmige Kern (11) so gekrümmt ist, daß er einen Winkel $< 90°$ einschließt, der bei einer Betätigung des Fahrpedals weiter verkleinert wird (Figur 2).

10. Weggeber nach Anspruch 8, dadurch gekennzeichnet, daß der stabförmige Kern (11) so gebogen ist, daß er einen Winkel $> 90°$ einschließt, der bei einer Betätigung weiter vergrößert wird (Figuren 3 u. 4).

11. Weggeber nach einem der Ansprüche 1-3, dadurch gekennzeichnet, daß der Kern (4) mit einer einzigen Wicklung (20) versehen ist, die mit einer Erregerschaltungsanordnung (21) und einer Meßschaltungsanordnung (22).

## Claims

1. Displacement transducer for detecting the position of a member, particularly an accelerator pedal in a motor vehicle, which position is converted into an electrical magnitude, characterised in that a core (4 ; 11) of soft-magnetic, amorphous material is connected to the member (accelerator pedal 1) in such a manner that a displacement of the member gives rise to an elastic deformation of the core, and that on the core (4 ; 11) at least one winding (20 ; 7, 8) is disposed which is connected to an energising and measurement circuit arrangement (21, 22 ;

14-19) for the magnetic properties of the core.

2. Displacement transducer according to Claim 1, characterised in that the energising and measurement circuit arrangement is arranged for measuring the variation of permeability of the core (4 ; 11).

3. Displacement transducer according to Claim 2, characterised in that the energising and measurement circuit arrangement and the coil(s) are disposed on the core (4 ; 11) for measuring permeability in accordance with the principle of the Förster probe. (Figure 6).

4. Displacement transducer according to one of Claims 1 to 3, characterised by the use of an amorphous, soft-magnetic alloy based on iron and nickel of high permeability (higher than 60,000), with a Vickers hardness ($HV_{02}$) of 1,000 and a reversed bending strength ($10^7$ load changes) of about $\pm 600$ N/mm$^2$.

5. Displacement transducer according to one of Claims 1 to 3, characterised by the use of an amorphous, soft-magnetic alloy based on cobalt, iron and nickel of high permeability (higher than 500,000), a Vickers hardness ($HV_{02}$) of 1,015 and a reversed bending strength ($10^7$ load changes) of $\pm 700$ N/mm$^2$.

6. Displacement transducer according to one of Claims 1 to 5, characterised in that the core is in the form of a resilient annular core (4), that the annular core lies at a first point (5) against a body (floor 3) which is fixed in position in relation to the displaceable member (1) and at a second point (6), which lies approximately opposite the said first point, lies against the member in such a manner that the annular shape is deformed on the displacement of the member (Figure 1).

7. Displacement transducer according to one of Claims 1 to 5, characterised in that the core (11) is in the form of a rod, that the rod-shaped core is joined at one end to a fixed body (floor 3) and, at a distance from this connection point, is connected to the displaceable member in such a manner that the rod-shaped core is subjected to bending stress (Figures 2 to 4).

8. Displacement transducer according to Claim 7, characterised in that a portion (12) of the rod-shaped core (11) lies against the accelerator pedal, parallel to the longitudinal extend of the said pedal, at a distance from the connection point.

9. Displacement transducer according to Claim 8, characterised in that the rod-shaped core (11), is curved in such a manner that it encloses an angle $< 90°$, which on the operation of the accelerator pedal is further reduced (Figure 2).

10. Displacement transducer according to Claim 8, characterised in that the rod-shaped core (11) is bent in such a manner that it encloses an angle $> 90°$, which is further increased on operation (Figures 3 and 4).

11. Displacement transducer according to one of Claims 1 to 3, characterised in that the core (4) is provided with a single winding (20) which is connected to an energising circuit arrangement (21) and a measurement circuit arrangement (22), and that a timer (23) is connected to the energising circuit arrangement and to the measurement circuit arrangement for the alternately timed operation of these two circuit arrangements in conjunction with the winding (Figure 7).

## Revendications

1. Indicateur de course pour détecter la position d'un organe, notamment d'une pédale d'accélérateur d'un véhicule automobile, qui est convertie en une grandeur électrique, indicateur caractérisé par le fait qu'un noyau (4 ; 11) en une matière magnétique amorphe à coercitivité faible est en liaison avec ledit organe (pédale d'accélérateur 1), de telle manière qu'un déplacement de cet organe provoque une déformation élastique dudit noyau ; et par le fait que, sur ledit noyau (4 ; 11), se trouve au moins un enroulement (20 ; 7, 8) qui est raccordé à un dispositif ou circuit (21, 22 ; 14-19) d'excitation et de mesure des propriétés magnétiques dudit noyau.

2. Indicateur de course selon la revendication 1, caractérisé par le fait que le circuit d'excitation et de mesure est destiné à mesurer la variation de perméabilité du noyau (4 ; 11).

3. Indicateur de course selon la revendication 2, caractérisé par le fait que le circuit d'excitation et de mesure et le ou les enroulements sont disposés sur le noyau (4 ; 11) pour mesurer la perméabilité selon le principe de la sonde de Förster (Figure 6).

4. Indicateur de course selon l'une des revendications 1 à 3, caractérisé par l'utilisation d'un alliage magnétique amorphe à coercitivité faible à base de fer et de nickel, de grande perméabilité (supérieure à 60 000), d'une dureté Vickers ($HV_{02}$) de 1 000 et d'une résistance à la flexion alternée ($10^7$ cycles d'effort alternés) d'environ $\pm$ 600 N/mm².

5. Indicateur de course selon l'une des revendications 1 à 3, caractérisé par l'utilisation d'un alliage magnétique amorphe à coercitivité faible à base de cobalt, de fer et de nickel, d'une grande perméabilité (supérieure à 500 000), d'une dureté Vickers ($HV_{02}$) de 1 015 et d'une résistance à la flexion alternée ($10^7$ cycles d'efforts alternés) de $\pm$ 700 N/mm².

6. Indicateur de course selon l'une des revendications 1 à 5, caractérisé par le fait que le noyau est réalisé sous la forme d'un noyau annulaire ou toroïdal élastique (4), et que ce noyau toroïdal repose en un premier emplacement (5) sur un corps (plancher 3) fixe par rapport à l'organe mobile (1) et est appliqué contre cet organe, en un second emplacement (6) situé approximativement en face dudit premier emplacement, de telle sorte que sa forme annulaire subisse une déformation lorsque ledit organe accomplit une course (figure 1).

7. Indicateur de course selon l'une des revendications 1 à 5, caractérisé par le fait que le noyau (11) a la forme d'une barre, et que ce noyau allongé est relié par une extrémité à un corps stationnaire (plancher 3) et est en liaison avec l'organe mobile, à distance de cette zone de liaison, de telle sorte que ledit noyau allongé soit sollicité à la flexion (figures 2 à 4).

8. Indicateur de course selon la revendication 7, caractérisé par le fait qu'un tronçon (12) du noyau allongé (11) est appliqué contre la pédale d'accélérateur parallèlement à l'étendue longitudinale de cette dernière, à distance de la zone de liaison.

9. Indicateur de course selon la revendication 8, caractérisé par le fait que le noyau allongé (11) est coudé de manière à former un angle < 90°, qui est réduit davantage lorsqu'on actionne la pédale d'accélérateur (figure 2).

10. Indicateur de course selon la revendication 8, caractérisé par le fait que le noyau allongé (11) est cintré de manière à former un angle > 90°, qui est davantage agrandi lorsqu'a lieu un actionnement (figures 3 et 4).

11. Indicateur de course selon l'une des revendications 1 à 3, caractérisé par le fait que le noyau (4) est doté d'un seul et unique enroulement (20) qui est raccordé à un circuit d'excitation (21) et à un circuit de mesure (22) ; et par le fait que, audit circuit d'excitation et audit circuit de mesure, est raccordée une minuterie (23) à impulsions pour actionner alternativement par impulsions ces deux circuits conjointement à l'enroulement (figure 7).

FIG.1

FIG.2

**FIG.3**

1

11

12

2

7

8

10

3

~9

F

1

11

12

13 7 8

~

**FIG.4**

B

H

**FIG.5**

FIG.6

FIG.7